# EUROPEAN PATENT SPECIFICATION

(11) **EP 1 121 295 B1**
(45) Date of publication and mention of the grant of the patent: **18.09.2002**
(21) Application number: 00942950.7
(22) Date of filing: 19.06.2000
(51) Int. Cl.: B65C 9/22

(54) **GLUE FOR LABELS**
ETIKETTENLEIM
COLLE POUR ETIQUETTE

(30) Priority: 28.07.1999 JP 21353799
(43) Date of publication of application: 08.08.2001
(73) Proprietor: National Starch and Chemical Investment Holding Corporation, Wilmington, Delaware 19803-7663 (US)
(72) Inventor: TKAYANAGI, Hiroya, Suita-shi, Osaka 565-0853 (JP)
(74) Representative: Held, Stephan, Dr.rer.nat., Dipl.-Chem.
(86) International application number: US0016866
(87) International publication number: WO01008984

(56) References cited:
- DE-A- 4 126 075
- DE-A- 19 521 564
- DE-B- 1 046 226
- GB-A- 694 174
- GB-A- 935 992
- GB-A- 1 125 926
- US-A- 4 008 116
- US-A- 4 262 058
- US-A- 4 431 757
- US-A- 4 675 351

## Description

The present invention provides a method for bonding a label to a container at a high speed, and particularly the method can be employed preferably for a pallet transfer rotary labeler (such as labeler manufactured by Krones Co., Ltd.) and so on.

As productions of foods and drinks such as beer, sake, and lactic acid drinks etc., which are put Into a container to be sold, have been significantly increasing In recent years, it has become necessary to speed up a method for bonding a label to their containers from the viewpoint of improvement in their productivity.

As used herein, "a container" means jars or bottles made of glass, plastic or metal, and "a label" means e.g. a material having a surface, to which an adhesive is applied, which is made of paper or metal such as aluminum which includes paper.

Usually, a high-speed labeler (labeling machine) is employed to bond a label to a container, various performances are required of an adhesive used in the labeler, and particularly two properties are important: one is adhesion strength of the adhesive itself and the other is a mechanical compatibility of the adhesive to an actually employed high-speed labeler.

Many kinds of adhesives have been developed as the adhesive used in these labelers, and these adhesives are usually water-soluble. It is known that initial adhesion of the adhesive depends on increase in viscosity caused by evaporation of water or by absorption of water into paper. Therefore, the initial adhesion can be controlled e.g. by a kind and an amount of a component as well as by a kind and an amount of an additive, which are incorporated into the adhesive.

On the other hand, the mechanical compatibility of the adhesive with the labeler depends on, for example, an actually employed high-speed labeler such as a pallet transfer rotary labeler (such as labeler manufactured by Krones Co., Ltd.). Further, a large number of properties such as viscosity, fluidity, stability, non-foaming property, and rust resistance of the adhesive are known as a property affecting the mechanical compatibility. Then, various theoretical studies have been carried out on the mechanical compatibility of the adhesive, but the respective properties are related complicatedly to one another. Therefore, it is difficult to find out theoretically an optimum labeling condition (parameter). Under these circumstances, thus, the adhesive is used in the actually employed labeler, so that the optimum parameter is found out by trial and error.

Incidentally, a casein-based aqueous adhesive is used as an adhesive, which has water resistance and alkali bottle washability, and which is superior in initial adhesion and is relatively excellent in high-speed labeling property, in the pallet transfer rotary labeler (such as labeler manufactured by Krones Co., Ltd.). The adhesive is used mainly for bonding a label to a glass container (e.g. beer bottle etc.). The optimum parameter as to its mechanical compatibility is empirically found out, and the adhesive is used while controlling both a viscosity of the adhesive and an amount of the adhesive applied.

However, when the conventionally used casein-based aqueous adhesive is used with a conventionally used suitable space of a scraper in the labeler, an amount of the adhesive transferred to a rubber pallet is larger than an appropriate amount. when the amount of the adhesive transferred to the rubber pallet is larger than the appropriate amount, an excess amount of the adhesive protrudes from the rubber pallet and adheres to the labeler or the container etc., to cause a problem that the adhesive spatters or strings. Further, such excess adhesive is easily clogged in a groove in the rubber pallet, to cause another problem that washing the rubber pallet is difficult in the operation of washing the labeler after the labeling has finished. Therefore, it is necessary that the amount of the adhesive transferred to the rubber pallet decreases to the optimum amount.

For reducing the amount of the applied adhesive, a manner that makes the space of the scraper narrower than the conventionally used space is employed. When the space of the scraper is narrowed, controlling the space of the scraper becomes delicate, so that the fine adjustment of the amount of the adhesive transferred to the rubber pallet becomes difficult, therefore fluctuation in the transferred amount readily occurs. Since a skill is required in controlling such a narrow space of the scraper, it is not easy to control the fluctuation in the transferred amount. Further, when labeling is carried out for a long time under the condition in which the space of the scraper is narrowed as described above, the tip of the scraper receives a large load. Furthermore, generated label paper dusts are retained at the tip of the scraper, therefore also a problem occurs in that the life of the scraper is shortened.

Thus, the method in which the conventional casein-based adhesive is used cannot achieve the object of speeding up bonding the label to the container.

Further, since a starch-based aqueous adhesive is advantageous in that its wet tack is superior, the adhesive is used in the pallet transfer rotary labeler (such as labeler manufactured by Krones Co., Ltd.) and mainly used for bonding the label to the glass container (e.g., beer bottle etc.). Its optimum parameter as to its mechanical compatibility is also empirically found, and the adhesive is used while controlling both a viscosity of the adhesive and an amount of the adhesive applied. However, the starch-based adhesive suffers from problems of slowly drying and inferior water resistance.

Therefore, the method in which the conventional starch-based aqueous adhesive is used cannot achieve the object of speeding up bonding the label.

Thus, there is a demand for an adhesion method for bonding the label to the container by using the pallet transfer rotary labeler such as labeler manufactured by Krones Co., Ltd. wherein initial adhesion is excellent and mechanical compatibilities such as a good application pattern on the label, easy control of a scraper, and a long life of the scraper etc. are excellent.

The present invention aims to achieve the above demand, that is, the problem of the invention is to provide an adhesion method for bonding a label to a container, in which initial adhesion and mechanical compatibility are excellent. Further, the problem of the invention is, in particular, to provide an adhesion method for bonding a label, which method is suitable for a pallet transfer rotary labeler such as labeler manufactured by Krones Co., Ltd. and in which initial adhesion is excellent and at least one mechanical compatibility selected from an application pattern on the label, easy control of a scraper, and prolongation of a scraper life is improved.

The present inventor carried out various studies on adhesion methods for bonding a label to a container. Consequently, as described below in detail, he has found that, with respect to the casein-based aqueous adhesive, a specific casein-based aqueous adhesive having a thixotropy index (TI) in a suitable range can improve mechanical compatibility while maintaining excellent initial adhesion. Thus he has completed the present invention.

In the present specification, the "thixotropy index (TI)" refers to a ratio (BH20/BH2) of a viscosity measured by rotating a rotor (rotor No. 7) at a rotational speed of 20 rpm (referred to hereinafter as "BH20") to a viscosity measured by rotating the rotor at a rotational speed of 2 rpm (referred to hereinafter as "BH2") each at 30 degree centigrade using Brookfield (BH) Viscometer (trade name) produced by Tokimec Co.,Ltd.

When the TI is equal to 1, the adhesive has Newtonian viscosity since its fluidity does not depend on a shear rate. When the TI is larger than 1, the adhesive has dilatancy since its viscosity increases with increase of the shear rate. And when the TI is smaller than 1, the adhesive has thixotropy since its viscosity decreases with increase of the shear rate.

Usually, the TI value of the casein-based aqueous adhesive is about 1. According to the present inventor's studies, it has been considered that the problem of the method in which the casein-based aqueous adhesive is used, as mentioned in the prior art, results from the fact that the conventional casein-based adhesive has nearly Newtonian viscosity.

As described in the Prior Art section, when the conventional casein-based aqueous adhesive is used with a conventionally used suitable space of the scraper in the pallet transfer rotary labeler such as labeler manufactured by Krones Co., Ltd., the amount of the adhesive transferred to the rubber pallet becomes larger than the optimum amount. Therefore, the amount of the adhesive transferred is controlled by narrowing the space of the scraper so that the amount of the adhesive transferred is decreased to the optimum amount. It has been considered that this causes the problems concerning the conventional casein-based aqueous adhesive.

That is, it has been considered that even if the space of the scraper is the conventionally used suitable space, the problems can be solved when the amount of the adhesive transferred to the rubber pallet is appropriate. That is, the problems can be solved when the amount of the adhesive transferred is decreased by modifying characteristics of the adhesive without changing the space of the scraper.

From the viewpoint described above, the present inventor has found that the problem can be solved when the casein-based aqueous adhesive exhibits an appropriate decrease in viscosity by shear stress that occurs when the adhesive passes through a space between a glue scale and the scraper in the labeler. That is, he has found that the problems can be solved when the casein-based aqueous adhesive has appropriate thixotropy. And the adhesion method of the present invention has been thereby completed.

Even if the space of the scraper is the conventionally used suitable space, a cohesive force of the casein-based aqueous adhesive decreases with decreasing viscosity when the adhesive has appropriate thixotropy. Therefore, the amount of the adhesive transferred to the rubber pallet decreases and becomes appropriate. Thus, it is not necessary to control the amount of the adhesive transferred to the rubber pallet for optimizing the amount of the adhesive by narrowing the space of the scraper. As a result, the problems caused by narrowing the space of the scraper can be avoided.

It is not preferable that the casein-based aqueous adhesive exhibits excessive thixotropy in the pallet transfer rotary labeler such as Crones, since another problem different from the above-described problems occurs. That is, too high decrease in the viscosity of the adhesive leads to too high decrease in the cohesive force thereof, and to resulting in too high decrease in the amount of the adhesive transferred to the rubber pallet. Therefore, the amount of the adhesive transferred must be controlled by widening the space of the scraper in order to increase and to optimize the amount of the adhesive transferred. As a result, there occurs problems of abnormal application patterns and stringing of the adhesive, etc.

The present invention has been completed based on the studies as described above. In one aspect, the present invention provides an adhesion method for bonding a label to a container, comprising the step of using an aqueous adhesive for the label which comprises
(A) casein and
(B) thixotropy index regulator, and
which has a thixotropy index (TI) of 0.5 to 0.8.

In the present invention, "(A) casein" may be commercial casein, and any casein used in the casein-based aqueous adhesion known in the art can be used. Examples of such casein include lactic casein, hydrochloric casein, and sulfuric casein etc.

These kinds of casein can be used alone or in combination.

In the present invention, "(B) thixotropy index regulator" is added in the adhesive in order to regulate the thixotropy index (TI) of the aqueous adhesive for the label of the present invention, and this regulator refers to a material for converting the fluiduty of the casein based adhesive from Newtonian to the desired thixotropic. For example, the thixotropy index regulator includes the following:
(b1) emulsions of resins such as polyvinyl acetate, ethylene-vinyl acetate copolymer, acrylic resin, polyurethane, and polyolefin etc.;
(b2) proteins such as wheat protein, soybean protein, denatured soybean protein, gelatin, and glue etc.; and
(b3) carbohydrates such as starch, dextrin, and denatured starch etc.

When the resin emulsion is contained as (B) the thixotropy index regulator, the resin concentration of the emulsion is preferably 40 to 70 percent by weight, and more preferably 45 to 65 percent by weight.

Moreover, the resin emulsion is contained in an amount of preferably 25 to 200 parts by weight, and more preferably 40 to 150 parts by weight, relative to 100 parts by weight of (A) the casein. The desired thixotropy cannot be given to the fluidity of the adhesive for the label by adding the resin emulsion when the content of the resin emulsion is less than 25 parts by weight relative to 100 parts by weight of (A) the casein. Furthermore, excessive thixotropy will be given to the fluidity of the adhesive for the label by adding the resin emulsion when the content of the resin emulsion exceeds 200 parts by weight relative to 100 parts by weight of (A) the casein.

The resin emulsion is particularly preferably the emulsion of at least one resin selected from polyvinyl acetate, ethylene-vinyl acetate copolymer, and acrylic resin.

When at least one selected from the proteins and carbohydrates is contained as (B) the thixotropy index regulator, said at least one selected from the proteins and carbohydrates is contained in an amount of preferably 1 to 10 parts by weight, and more preferably 1 to 5 parts by weight, relative to 100 parts by weight of (A) the casein. The desired thixotropy cannot be given to the fluidity of the adhesive for the label by adding at least one selected from the proteins and carbohydrates when the content of at least one selected from the proteins and the carbohydrates is less than 10 parts relative to 100 parts by weight of (A) the casein. Further, excessive thixotropy will be given to the fluidity of the adhesive for the label by adding at least one selected from the proteins and carbohydrates when the content of at least one selected from the proteins and carbohydrates exceeds 200 parts by weight relative to 100 parts by (A) the casein.

In particular, the protein is preferably at least one member selected from wheat protein, soybean protein, and denatured soybean protein, while the carbohydrate is preferably the starch.

Any (B) thixotropy index regulator, which may be commercially available, can be used.

Further, (B) the thixotropy index regulator can be used alone or in combination.

The aqueous adhesive for the label used in the present invention can be produced by using the above-mentioned (A) and (B) in the same manner as in a method conventionally employed for producing the casein-based aqueous adhesives and by optionally adding water, ammonia water, urea, zinc carbonate, zinc oxide, dicyandiamide, a defoaming agent, and a preservative etc. (see Adhesion Handbook, Third Ed., pp. 299-310, compiled by Japanese Society of Adhesive and published in June 1996 by Nikkan Kogyo Shinbun).

Amounts of these additives to be added should be suitably regulated so as to satisfy the characteristics required of the aqueous adhesive for the label used in the present invention as described below.

As used herein, "water" refers to conventional water such as distilled water or ion-exchanged water. Further, "water" may contain various additives conventionally used in the casein-based aqueous adhesive.

The thixotropy index (TI) of the aqueous adhesive for the label used in the present invention is preferably 0.5 to 0.8, more preferably 0.6 to 0.8, and most preferably 0.7 to 0.75.

The viscosity (BH20 at 30 degree centigrade) of the aqueous adhesive for the label used in the present invention is preferably 30,000 to 50,000 cps.

The pH value of the aqueous adhesive for the label used in the present invention is preferably 7.0 to 9.0, more preferably 7.5 to 8.5, and most preferably 7.8 to 8.2.

A solid content in the aqueous adhesive for the label used in the present invention is preferably 40 to 50 percent by weight, more preferably 43 to 47 percent by weight, and most preferably 44 to 46 percent by weight.

In the method for bonding the label according to the present invention, the aqueous adhesive for the label described above is used to bond the label to the container, in so doing, a conventionally used high-speed labeler can be employed to readily determine a parameter for its mechanical compatibility, and the label can be bonded to the container at a high speed without particular troubles under a conventional condition for use or under a slightly modified condition for use.

Here, examples of the "high-speed labeler" are labeler manufactured by Krones C., Ltd. or a pallet transfer rotary labeler manufactured by Shibuya Kogyo Co., Ltd.

In particular, the pallet transfer rotary labeler such as labeler manufactured by Krones Co., Ltd. is preferably employed as the high-speed labeler. When the pallet transfer rotary labeler such as labeler manufactured by Krones Co., Ltd. is employed, the label can be bonded to the container while the space of the scraper is kept at its suitable space.

Therefore, the adhesion method of the present invention has a feature that it is easy to establish an operational condition for the employed high-speed labeler.

As described above, in the adhesion method for the label of the present invention, the above-described aqueous adhesive for the label is used in order to bond the label to the container. Therefore, initial adhesion is excellent, and the conventionally used suitable space, with which troubles hardly occur, can be used as the space of the scraper. And thus it is possible to provide an adhesion method in which at least one mechanical compatibility selected from the application pattern on the label, easy regulation of the scraper, and prolongation of the scraper life is improved.

Further, the adhesion method of the present invention can be used suitably by using the pallet transfer rotary labeler etc. such as the high-speed labeler, particularly labeler manufactured by Krones Co., Ltd..

### Examples

Hereinafter, the present invention is described specifically in more detail by reference to Examples and Comparative Examples, but each of these Examples are merely one embodiment of the present invention and they are not intended to limit the present invention.

### Example 1

### (1) Production of aqueous adhesive for label

A 2-L four-necked separable flask equipped with a thermometer and a stirrer was charged at room temperature with 200 parts by weight of water, 10 parts by weight of a shellac resin (Gifu Shellac MGF Co., Ltd.), 3 parts by weight of 25 percent ammonia water, 100 parts by weight of urea, 10 parts by weight of 40 percent zinc oxide paste, and 3 parts by weight of a defoaming agent, and the mixture was dispersed by sufficient stirring. Then, 100 parts by weight of New Zealand lactic casein was added little by little and dissolved therein while stirring at room temperature, and then the mixture was heated at 70 to 75 degree centigrade and stirred for 30 minutes.

After the mixture was cooled, 1 part by weight of benzoic acid, 1 part by weight of diammonium phosphate, 1 part by weight of a preservative, and 66 parts by weight of 55 percent EVA emulsion (DUR-O-SET25-1800 (trade name), Nippon NSC Ltd.) were added to the mixture with stirring. Urea, water, and 25 percent ammonia water were suitably added to the mixture such that its viscosity of BH20 at 30 degree centigrade (the method for measuring the viscosity is described below) is in the range of 30,000 to 50,000 cps and its pH is in the range of 7.0 to 9.0, whereby an aqueous adhesive for the label used in the adhesion method in Example 1 was obtained.

### (2) Characteristics of aqueous adhesive for label

The viscosity of the resulting aqueous adhesive for the label was measured at 30 degree centigrade using rotor No. 7 in a Brookfield (BH) viscometer (trade name) (Tokimec Co., Ltd.). The viscosity was measured at two rotational speeds. That is, two measurement values were measured: one is a viscosity when the rotor was rotated at 20 rpm (referred to hereinafter as "BH20"); and the other is a viscosity when the rotor was rotated at 2 rpm (referred to hereinafter as "BH2"). Since the BH20 was 35,000 cps and the BH2 was 50,000 cps, its thixotropy index TI (BH20/BH2) was 0.70.

The solid content of this aqueous adhesive for the label, which was determined after drying the aqueous adhesion by heating in an oven at 105 °C at ordinary pressure, was 46 percent by weight.

Further, the pH value of the aqueous adhesive for the label, which was determined using a pH meter, was 8.2.

### (3) Evaluation of mechanical compatibility

Using the aqueous adhesive for the label, a test to bond a paper label to a beer glass bottle by using an automatic labeler manufactured by Krones Co., Ltd. at a rate of 600 bottles/min. was performed with a space of a scraper which applied an optimum amount of the aqueous adhesive to the label. The size of the label was 9 cm × 8 cm, and the optimum amount of the aqueous adhesive applied to the label was 0.15 to 0.30 g/label.

The evaluation items for the mechanical compatibility are:
(1) Easy control of the amount of the aqueous adhesive applied to the label;
(2) Good application pattern of the adhesive on the label;
(3) Generation of adhesive drips protruding from the pallet and adhesive spots of the bottle etc.;
(4) Generation of stringing or spattering of the adhesive in the rubber pallet; and
(5) the scraper life.

When the aqueous adhesive for the label in Example 1 was used, an appropriate amount of the adhesive was applied onto the label with the conventionally used space of the scraper. Therefore, the amount of the adhesive applied was easily controlled. The application pattern was good, and neither dripping nor stringing of the adhesive was observed. Further, the scraper was employed for more than six months without damage by abrasion, during which no paper dusts of the label was accumulated in the space between the scraper and the glue roller. The results are collectively shown in Table 1.

### Example 2

An aqueous adhesive for the label used in the adhesion method in Example 2 was obtained in the same manner as in Example 1 except that 44 parts by weight of the 55 percent EVA emulsion was used in place of 66 parts by weight of the 55 percent EVA emulsion in Example 1.

The characteristics of the resulting aqueous adhesive for the label were determined in the same manners as in Example 1. The results are shown in Table 1.

The test of bonding the paper label to the glass beer bottle was performed using the aqueous adhesive for the label in Example 2 in the same manner as in Example 1. The results are shown in Table 1.

### Example 3

An aqueous adhesive for the label used in the adhesion method in Example 3 was obtained in the same manner as in Example 1 except that 2 parts by weight of a denatured soybean protein (pro-Cote 2500 (trade name) produced by Protein Technologies International) and 22 parts by weight of the 55 percent EVA emulsion were used in place of 66 parts by weight of the 55 percent EVA emulsion in Example 1.

The characteristics of the resulting aqueous adhesive for the label were determined in the same manners as in Example 1. The results are shown in Table 1.

The test of bonding the paper label to the glass beer bottle was performed using the aqueous adhesive for the label in Example 3 in the same manner as in Example 1. The results are shown in Table 1.

### Example 4

An aqueous adhesive for the label used in the adhesion method in Example 4 was obtained in the same manner as in Example 1 except that 132 parts by weight of the 55 percent EVA emulsion was used in place of 66 parts by weight of the 55 percent EVA emulsion in Example 1.

The characteristics of the resulting aqueous adhesive for the label were determined in the same manners as in Example 1. The results are shown in Table 1.

The test of bonding the paper label to the glass beer bottle was performed using the aqueous adhesive for the label in Example 4 in the same manner as in Example 1. The results are shown in Table 1.

### Comparative Example 1

An aqueous adhesive for the label used in the adhesion method in Comparative Example 1 was obtained in the same manner as in Example 1 except that the 55 percent EVA emulsion in Example 1 was not used.

The characteristics of the resulting aqueous adhesive for the label were determined in the same manners as in Example 1. The results are shown in Table 1.

The test of bonding the paper label to the glass beer bottle was performed using the aqueous adhesive for the label in Comparative Example 1 in the same manner as in Example 1. When this aqueous adhesive was used, an appropriate amount of the adhesive was applied onto the label with a narrower space of the scraper than the conventionally used space. Therefore, it was difficult to control the amount of the adhesive applied since the space of the scraper was narrower. The application pattern was not good since adhesive spots were formed. Dripping of the adhesive occurred to cause adhesive spots on the bottle etc. However, stringing of the adhesive was not observed. Further, the scraper could be used for only one month since label paper dusts easily accumulated in the space between the scraper and the glue roller and the scraper was severely abraded. The results are collectively shown in Table 1.

### Comparative Example 2

An aqueous adhesive used in the adhesion method in Comparative Example 2 was obtained in the same manner as in Example 1 except that 22 parts by weight of the 55 percent EVA emulsion was used in place of 66 parts by weight of the 55 percent EVA emulsion in Example 1.

The characteristics of the resulting aqueous adhesive for the label were determined in the same manners as in Example 1. The results are shown in Table 1.

The test of bonding the paper label to the glass beer bottle was performed using the aqueous adhesive for the label in Comparative Example 2 in the same manner as in Example 1. The results are shown in Table 1.

### Comparative Example 3

An aqueous adhesive used in the adhesion method in Comparative Example 3 was obtained in the same manner as in Example 1 except that 264 parts by weight of the 55 percent EVA emulsion was used in place of 66 parts by weight of the 55 percent EVA emulsion in Example 1.

The characteristics of the resulting aqueous adhesive for the label were determined in the same manners as in Example 1. The results are shown in Table 1.

The test of bonding the paper label to the glass beer bottle was performed using the aqueous adhesive for the label in Comparative Example 3 in the same manner as in Example 1. When the aqueous adhesive was used, an appropriate amount of the adhesive was applied onto the label with a wider space of the scraper than the conventionally used space. Therefore, it was easy to control the amount of the adhesive applied since the space of the scraper was wider. The application pattern was unclear and poor since the adhesive penetrated into the groove in the rubber pallet. No dripping of the adhesive observed. However, the widening of the space of the scraper caused stringing of the adhesive. The scraper was able to be used for more than six months. The results are collectively shown in Table 1.

**Table 1**

| Composition^{a)} | Example | | | | Comparative Example | | |
|---|---|---|---|---|---|---|---|
| | 1 | 2 | 3 | 4 | 1 | 2 | 3 |
| Casein | 100 | 100 | 100 | 100 | 100 | 100 | 100 |
| Denatured soybean protein | | | 2 | | | | |
| 55 percent EVA | 66 | 44 | 22 | 132 | | 22 | 264 |

| Characteristics of adhesive | | | | | | | |
|---|---|---|---|---|---|---|---|
| BH20^{b)} | 35000 | 36000 | 36000 | 40000 | 40000 | 37000 | 35000 |
| BH2^{b)} | 50000 | 48000 | 51000 | 73000 | 44000 | 44000 | 77000 |
| TI (BH20/BH2)^{c)} | 0.70 | 0.75 | 0.71 | 0.55 | 0.91 | 0.84 | 0.45 |
| Solid content^{d)} | 46 | 45 | 45 | 46 | 43 | 45 | 46 |
| pH | 8.2 | 8.2 | 8.3 | 8.0 | 8.1 | 8.1 | 8.1 |

| Mechanical compatibility | | | | | | | |
|---|---|---|---|---|---|---|---|
| Space of scraper | suitable | suitable | suitable | suitable | narrow | narrow | wide |
| Control of applied amount | easy | easy | easy | easy | difficult | difficult | easy |
| Application pattern | good | good | good | good | poor | poor | poor |
| Dripping | no | no | no | no | yes | yes | no |
| Stringing | no | no | no | no | no | no | yes |
| Scraper life | >6 | >6 | >6 | >6 | 1 | 3 | >6 |
| | months | months | months | months | month | months | months |

| | | | | | | | |
|---|---|---|---|---|---|---|---|
| a) Unit is part by weight. | | | | | | | |
| b) Measured value at 30 degree centigrade. The unit is cps. | | | | | | | |
| c) Measured value at 30 degree centigrade. | | | | | | | |
| d) Unit is percent by weight. | | | | | | | |

### Effect of the Invention

In the present invention, since the aqueous adhesive for the label, which comprises (A) the casein and (B) the thixotropy index regulator and has the thixotropy Index (TI) of 0.5 to 0.8, is used to bond the label onto the container, initial adhesion of the adhesive is excellent. Further, since the conventionally used suitable space, with which troubles hardly occur, can be used as the space of the scraper, it is possible to provide the adhesion method, in which at least one mechanical compatibility selected from the application pattern on the label, the easy control of the scraper, and the prolongation of the scraper life is improved.

The adhesion method of the present invention can be employed suitably in the pallet transfer rotary labeler etc. such as a high-speed tabeter, particularly labeler manufactured by Krones Co.,Ltd.

## Claims

1. An adhesion method for bonding a label to a container, comprising the step of using an aqueous adhesive for the label which comprises
(A) casein and
(B) thixotropy index regulator, and
which has a thixotropy index (TI) of 0.5 to 0.8.

2. The adhesion method according to claim 1 wherein a resin emulsion, whose resin concentration is 40 to 70 percent by weight, is contained as (B) the thixotropy index regulator in an amount of 25 to 200 parts by weight relative to 100 parts by weight of (A) the casein.

3. The adhesion method according to claim 2 wherein the resin emulsion is at least one selected from polyvinyl acetate, ethylene-vinyl acetate copolymer, and acrylic resin.

4. The adhesion method according to any one of claims 1 to 3 wherein at least one selected from proteins and carbohydrates is contained as (B) the thixotropy index regulator in an amount of 1 to 10 parts by weight relative to 100 parts by weight of (A) the casein.

5. The adhesion method according to claim 4 wherein the proteins are wheat protein, soybean protein, and denatured soybean protein, and the carbohydrate is starch.

6. The adhesion method according to any one of claims 1 to 5 wherein a pallet transfer rotary labeler is used.

## Patentansprüche

1. Adhäsionsverfahren zur Bindung eines Etiketts an einen Container, umfassend den Schritt der Verwendung eines wässrigen Klebers für das Etikett, der umfasst
(A) Kasein und
(B) Regulator des thixotropen Index, und
der einen thixotropen Index (TI) von 0,5 bis 0,8 aufweist.

2. Adhäsionsverfahren gemäß Anspruch 1, wobei eine Harzemulsion, deren Harzkonzentration bei 40 bis 70 Gew.-% liegt, als (B) Regulator des thixotropen Index in einer Menge von 25 bis 200 Gewichtsteilen vorliegt, relativ zu 100 Gewichtsteilen von (A) Kasein.

3. Adhäsionsverfahren gemäß Anspruch 2, wobei die Harzemulsion mindestens eine, ausgewählt aus den Folgenden ist: Polyvinylacetat, Ethylen-Vinylacetat-Copolymer und Acrylharz.

4. Adhäsionsverfahren gemäß mindestens einem der Ansprüche 1 bis 3, wobei mindestens eines ausgewählt aus Proteinen und Kohlenhydraten als (B) Regulator des thixotropen Index in einer Menge von 1 bis 10 Gewichtsteilen enthalten ist, relativ zu 100 Gewichtsteilen von (A) Kasein.

5. Adhäsionsverfahren gemäß Anspruch 4, wobei die Proteine Weizenprotein, Sojabohnenprotein und denaturiertes Sojabohnenprotein sind und das Kohlenhydrat Stärke ist.

6. Adhäsionsverfahren gemäß mindestens einem der Ansprüche 1 bis 5, wobei ein Präge-Rotations-Etikettierer verwendet wird.

## Revendications

1. Procédé d'adhésion pour coller une étiquette sur un conteneur, comprenant l'étape consistant à utiliser un adhésif aqueux pour l'étiquette,
qui comprend
(A) de la caséine et
(B) un régulateur de l'indice de thixotropie, et
qui a un indice de thixotropie (IT) de 0,5 à 0,8.

2. Procédé d'adhésion selon la revendication 1, dans lequel une émulsion de résine, dont la concentration de résine est de 40 à 70 % en poids, est contenue en tant que régulateur de l'indice de thixotropie (B) en une quantité de 25 à 200 parties en poids pour 100 parties en poids de caséine (A).

3. Procédé d'adhésion selon la revendication 2, dans lequel l'émulsion de résine est au moins une émulsion de résine choisie parmi l'acétate de polyvinyle, un copolymère d'éthylène-acétate de vinyle et une résine acrylique.

4. Procédé d'adhésion selon l'une quelconque des revendications 1 à 3, dans lequel au moins un élément choisi parmi des protéines et des glucides est contenu en tant que régulateur de l'indice de thixotropie (B) en une quantité de 1 à 10 parties en poids pour 100 parties en poids de caséine (A).

5. Procédé d'adhésion selon la revendication 4, dans lequel les protéines sont une protéine de blé, une protéine de graines de soja et une protéine dénaturée de graines de soja, et le glucide est de l'amidon.

6. Procédé d'adhésion selon l'une quelconque des revendications 1 à 5, dans lequel on utilise une étiqueteuse rotative de palettes par transfert.
